# EUROPÄISCHE PATENTSCHRIFT

(11) **EP 2 715 190 B1**
(45) Veröffentlichungstag und Bekanntmachung des Hinweises auf die Patenterteilung: **24.08.2016**
(21) Anmeldenummer: 12710238.2
(22) Anmeldetag: 20.03.2012
(51) Int. Cl.: F16H 59/68, F16H 61/28, F16H 61/32, F16H 63/30

(54) **VERFAHREN ZUR INITIALISIERUNG DER BETÄTIGUNGSEINHEIT EINER SCHALTEINRICHTUNG UND SCHALTEINRICHTUNG FÜR EIN LASTSCHALTGETRIEBE**
METHOD FOR INITIALIZING THE ACTUATION UNIT OF A SHIFT DEVICE, AND SHIFT DEVICE FOR A POWERSHIFT TRANSMISSION
PROCÉDÉ POUR INITIALISER L'UNITÉ D'ACTIONNEMENT D'UN DISPOSITIF DE COMMANDE ET DISPOSITIF DE COMMANDE POUR BOÎTE DE VITESSES AVEC COMMANDE SOUS CHARGE

(30) Priorität: 24.05.2011 DE 102011076388
(43) Veröffentlichungstag der Anmeldung: 09.04.2014
(73) Patentinhaber: ZF Friedrichshafen AG, 88046 Friedrichshafen (DE)
(72) Erfinder: DREIBHOLZ, Ralf, 88074 Meckenbeuren (DE); REISCH, Matthias, 88214 Ravensburg (DE)
(86) Internationale Anmeldenummer: PCT/EP2012/054879
(87) Internationale Veröffentlichungsnummer: WO 2012/159795

(56) Entgegenhaltungen:
- DE-A1-102004 010 271
- DE-A1-102008 000 641
- DE-B4- 19 731 842

## Beschreibung

Die Erfindung betrifft eine Schalteinrichtung für ein Lastschaltgetriebe, mit einer Betätigungseinheit zum wechselseitigen Aufschalten zweier Zahnräder in einen Getriebeleistungsfluss, wobei zur Initialisierung ein entlang einer Schaltwelle verfahrbares Schaltelement der Schalteinrichtung nacheinander in beide Bewegungsrichtungen bis zur endseitigen Blockadestellung an dem jeweiligen Zahnrad verfährt und eine Sensorik der Betätigungseinheit zur Positionserfassung der Schalteinrichtung vorgesehen ist. Die Erfindung betrifft des Weiteren auch ein Lastschaltgetriebe selbst und insbesondere ein Verfahren zur Initialisierung der Betätigungseinheit einer vorstehend angegebenen Schalteinrichtung.

Das Einsatzgebiet der Erfindung erstreckt sich vornehmlich auf Doppelkupplungsgetriebe. Diese bestehen prinzipiell aus mindestens zwei parallel geschalteten Einzelgetrieben, welche jedes für sich mindestens ein Lastschaltelement und eine Reihe von formschlüssig schaltenden Schaltelementen besitzen. Ein Schaltelement ist dabei Bestandteil einer Schalteinrichtung, welche auch eine Betätigungseinheit für das Schaltelement umfasst. Im jeweils lastfreien Getriebezweig eines Doppelkupplungsgetriebes können Gänge durch Einlegen der formschlüssig schaltenden Schaltelemente vorbereitet werden. Das Schalten dieser formschlüssig schaltenden Schaltelemente wird mit Hilfe der Betätigungseinheit beispielsweise hydraulisch, elektromechanisch, elektromagnetisch oder pneumatisch durchgeführt. Die Erfindung lässt sich jedoch auch bei anderen Lastschaltgetrieben einsetzen, welche vornehmlich automatisch betätigt werden.

Bei der Verwendung elektromechanischer Betätigungseinheiten, sogenannten Schaltstellern, ist es erforderlich, deren aktuelle Stellung zu kennen, um zwischen eingelegter und nicht eingelegter Position der Betätigungseinheit unterscheiden zu können. Die Betätigungseinheit umfasst in der Regel Elektromotoren, welche außerhalb oder innerhalb einer Schaltwelle angeordnet sind. Deren rotatorische Bewegung wird durch ein mechanisches Übertragungselement in eine translatorische Bewegung entlang der Schaltwelle für die Betätigung der formschlüssig schaltenden Schalteinrichtung umgewandelt. Um die Zahl der Schalteinrichtungen gering zu halten, sind in allgemein bekannter Weise durch eine Schalteinrichtung immer zwei benachbart auf der Schaltwelle angeordnete Zahnräder per Formschluss wechselseitig in den Leistungsfluss des Getriebes schaltbar.

Aus der DE 197 31 842 B4 geht eine schaltbare Übersetzungsstufe eines Lastgetriebes hervor, bei welcher im vorstehend erläuterten Sinne zwei benachbart auf einer als Schaltwelle ausgebildeten Ausgangswelle angeordnete Zahnräder über eine Schalteinrichtung wechselseitig in den Leistungsfluss derart einschaltbar sind, dass eine der beiden vorhandenen Getriebestufen unterschiedlicher Übersetzung wirkt. Die axial positionsveränderliche Schalteinrichtung ist zur Änderung der Übersetzung in die richtige Position zu bringen. Wird die korrekte axiale Position nicht erreicht, ergibt sich kein wirksamer Zahneingriff, was zu einer Fehlfunktion des Getriebes führt. Besonders kritisch wird eine solche Fehlfunktion des Getriebes dann, wenn in einem Fahrzeug automatisierte oder weitgehend automatisierte Steuerungsprozesse für das Getriebe ablaufen, die durch eine mögliche Fehlfunktion beeinträchtigt werden, weil die Möglichkeit des Bedieners, auf eine Fehlfunktion zu reagieren, eingeschränkt ist.

Aus diesem Grunde ist es erforderlich, die aktuelle Position der Schalteinrichtung zu überwachen, um einen Lastwechsel nur dann durchzuführen, wenn ein zuverlässiger Zahneingriff gegeben ist, also keine Zahn-auf-Zahn-Stellung oder Zwischenstellungen vorliegen.

Um eine derartige Funktionsüberwachung zu realisieren, wird bei diesem Stand der Technik vorgeschlagen, dass ein Sensor die Ausgangsposition der Schalteinrichtung erfasst und eine nachgeschaltete Recheneinrichtung diese abspeichert. Anschließend wird die Schalteinrichtung zur anderen Schaltposition hin betätigt. Anschließend wird die von der Schalteinrichtung eingenommene Endposition durch den Sensor erfasst und wiederum durch die Recheneinrichtung gespeichert. Die der jeweiligen Endstellung entsprechende Positionsinformation wird anhand vorgegebener Beurteilungskriterien anschließend durch die Recheneinrichtung beurteilt. Anschließend wird der Zyklus solange wiederholt, bis ein vorgegebenes Beurteilungskriterium erfüllt ist, also eine günstige Zahneingriffsstellung erreicht ist. Als Beurteilungskriterium wird hierbei das in das Getriebe eingeleitete oder vom Getriebe abgegebene Drehmoment oder der Abfall der Motordrehzahl verwendet, was steuerungstechnisch recht aufwändig erscheint.

Gemäß einer anderen allgemein bekannten Lösung des Standes der Technik wird auf eine zusätzliche Absolutpositionserfassung der Schalteinrichtung verzichtet indem auf die Sensorik der vorhandenen elektromotorischen Betätigungseinheit zurückgegriffen wird. Hierdurch besteht jedoch das Problem, dass beim Einschalten des Systems die aktuelle Absolutposition der mindestens einen Betätigungseinheit des Getriebes unbekannt ist.

Aus der DE 10 2008 000 641 A1 geht eine technische Lösung hervor, welche dieses Problem durch ein spezielles Verfahren zur Initialisierung der Betätigungseinrichtung des Getriebes löst. Es wird die Positionserfassung der Betätigungseinrichtung verwendet, in dem mit der Schalteinrichtung nacheinander in jede der beiden Bewegungsrichtungen bis zu einer Blockade zumindest eine Bewegung durchgeführt wird. Die jeweilige Endposition an den Blockadestellen wird durch die Positionserfassung der Betätigungseinrichtung ermittelt. Aus den erfassten Endpositionen wird eine dem jeweiligen Ende der Gassenbreite (GB) oder der Neutralbreite (NB) zugeordnete Absolutposition (S1, S2, S3, S4) in der Schaltgasse durch einen Vergleich der Abstände zwischen den erfassten Positionen und der Gassenbreite (GB) oder der Neutralbreite (NB) der Schaltgasse bestimmt.

Allerdings ist diese technische Lösung für in unterschiedliche Richtungen gleiche Durchschaltwege gedacht.

Aus der gattungsgemäßen DE 10 2004 010271 A1 der Anmelderin ist eine Vorrichtung zur Bestimmung der Position eines Schaltelementes in einem klauengeschalteten automatisierten Fahrzeuggetriebe, mit mindestens zwei Zahnrädern, einer Schaltgabel, einer mechanischen Verstelleinrichtung, mindestens einem Sensor, einem Antrieb und einem mindestens mit dem Sensor über eine Signalleitung verbundenem Steuergerät bekannt, wobei das Schaltelement mindestens eine radiale Nut besitzt, in welche die Schaltgabel eingreift, welche durch die mechanische Verstelleinrichtung axial verschiebbar ist. Hierbei ist vorgesehen, dass das Schaltelement und die mindestens zwei Zahnräder eine jeweils korrespondierende Verzahnung besitzen, wobei die Verzahnungen an den mindestens zwei Zahnrädern und der korrespondierenden Verzahnung des Schaltelementes auf beiden Seiten der Nut eine unterschiedliche axiale Ausdehnung besitzen.

Es ist demgegenüber die Aufgabe der vorliegenden Erfindung, ein Verfahren zur Initialisierung der Betätigungseinheit eines in beide Bewegungsrichtungen entlang einer Schaltwelle verfahrbaren Schaltelementes einer Schalteinrichtung mit unterschiedlichen Durchschaltwegen zu schaffen, welche sich zur Absolutpositionserfassung in der Schaltgasse der Positionserfassung der Betätigungseinrichtung bedienen kann.

Die Aufgabe wird ausgehend von einem Verfahren gemäß dem Oberbegriff des Anspruchs 1 in Verbindung mit dessen kennzeichnenden Merkmalen gelöst. Hinsichtlich einer gegenständlichen Schalteinrichtung wird die Aufgabe durch Anspruch 7 gelöst. Als besonderen Einsatzfall gibt Anspruch 8 ein die erfindungsgemäße Lösung umfassendes Lastschaltgetriebe an.

Die Erfindung schließt die verfahrentechnische Lehre ein, dass aus einer zuvor sensortechnisch ermittelten Blockadestellung des Schaltelementes in beide Bewegungsrichtungen zunächst der Verfahrweg zwischen beiden Blockadestellungen ermittelt wird, welcher anschließend mit den hinterlegten vier möglichen Verfahrwegen verglichen wird, woraus die Ist-Stellung der Schalteinrichtung festgestellt wird, um die Betätigungseinheit bei in beiden Bewegungsrichtungen unterschiedlichen Durchschaltwegen zu initialisieren.

Der Vorteil der erfindungsgemäßen Lösung liegt insbesondere darin, dass eine Drehbewegung der Getriebewellen nicht mehr notwendig ist, um ein Durchschalten der Klauen der Schalteinrichtung zu erreichen. Auf Positionssensoren zur Ermittlung der aktuellen Absolutposition der Schalteinrichtung kann ebenfalls verzichtet werden, da zur Ermittlung des Verfahrwegs die Positionserfassung der Betätigungseinheit genutzt wird. Die Regelung der innerhalb der Betätigungseinheit der Schalteinrichtung verwendeten Elektromotoren benötigt sowieso einen Rotorlagesensor, welcher sich auf der Motorwelle befindet.

Aufgrund der direkten Kopplung zwischen Motorwelle und Schaltelement der Schalteinrichtung kann durch einen linearen Zusammenhang von der Motorposition auf die Position des Schaltelements geschlossen werden. Um den gesamten Verfahrweg des Schaltelements zurückzulegen, können mehrere Motorumdrehungen notwendig sein. Ein direkter Rückschluss von Motorposition auf den linearen Weg ist nicht möglich, wofür die erfindungsgemäße Lösung zur Referenzierung der Absolutposition zum Einsatz kommt. Die übergeordnete Getriebesteuerung veranlasst eine definierte Startposition als Absolutposition, falls die Position einzelner Schalteinrichtungen unbekannt sind. Dies kann beispielsweise infolge der Montage am Bandende, nach Wartung oder dem Fehlerfall oder zur Diagnose auftreten. Eine Randbedingung für die Referenzierung der Absolutposition ist die teilweise Momentfreiheit des Getriebes.

Nach Durchführung der erfindungsgemäßen Verfahrensschritte ist die aktuelle Position der Schalteinrichtung schnell und zuverlässig bestimmbar. Die Genauigkeit lässt sich allerdings durch eine weitere, die Erfindung verbessernde Maßnahme dadurch erhöhen, dass beide Bewegungsrichtungen mehrfach durchfahren werden, wonach die jeweiligen Ergebnisse für die Ist-Stellung der Schalteinrichtung abschließend gemittelt werden.

Die Vergleichsroutine für den sensortechnisch ermittelten Verfahrweg x mit den für eine Schaltgasse geltenden vier möglichen Verfahrwegen basiert vorzugsweise auf der nachfolgenden Auswertungslogik:
- Eine Übereinstimmung des ermittelten Fahrwegs x mit dem kürzesten hinterlegten Fahrweg x_{NB} wird als eine beidseitige Zahn-auf-Zahn-Stellung des Schaltelements der Schalteinrichtung mit den beiden Zahnrädern ausgewertet.
- Eine Übereinstimmung des ermittelten Verfahrwegs x mit dem längsten hinterlegten Verfahrweg x_{GB} wird als eine beidseitige Durchschaltstellung des Schaltelements der Schalteinrichtung mit den beiden Zahnrädern ausgewertet. Dies entspricht der angestrebten Soll-Position nach einem Gangwechsel.
- Eine Übereinstimmung des ermittelten Verfahrwegs x mit dem hinterlegten Verfahrwegs x_{RE} wird als eine nur rechtsseitige Zahn-auf-Zahn-Stellung des Schaltelements der Schalteinrichtung mit den beiden Zahnrädern ausgewertet, was einer rechtsseitig undefinierten Eingriffsposition entspricht.
- Eine Übereinstimmung des ermittelten Verfahrwegs x mit dem hinterlegten Fahrweg X_{LI} wird als eine nur linksseitige Zahn-auf-Zahn-Stellung des Schaltelements der Schalteinrichtung mit den beiden Zahnrädern ausgewertet, was einer linksseitig undefinierten Schaltstellung entspricht.

Weitere die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Fig. 1: eine exemplarisch-schematische Darstellung einer schaltbaren Übersetzungsstufe eines Lastschaltgetriebes mit einer über eine Betätigungseinheit elektromotorisch betätigten Schalteinrichtung,
- Fig. 2: eine graphische Darstellung eines ersten möglichen Verfahrwegs X_{NB} bei der Positionserfassung der Schalteinrichtung,
- Fig. 3: eine graphische Darstellung eines zweiten möglichen Verfahrwegs X_{GB} bei der Positionserfassung der Schalteinrichtung,
- Fig. 4: eine graphische Darstellung eines dritten möglichen Verfahrwegs X_{LI} bei der Positionserfassung der Schalteinrichtung,
- Fig. 5: eine graphische Darstellung eines vierten möglichen Verfahrwegs X_{RE} bei der Positionserfassung der Schalteinrichtung.

Die Erfindung wird nachfolgend anhand eines exemplarischen Schaltgetriebes beschrieben. Dieses ist lediglich als Grundelement eines Lastschaltgetriebes anzusehen, welches aus einer Kombination mehrerer solcher Schaltgetriebe aufgebaut sein kann. Unter dem Begriff "Schaltgetriebe" ist ein Getriebe zu verstehen, bei dem eine Eingangsdrehzahl über miteinander kämmende Zahnräder auf eine Ausgangsdrehzahl übersetzt wird. Dabei ist das Verhältnis zwischen Eingangsdrehzahl und Ausgangsdrehzahl in Stufen veränderlich. Zu den hier in Rede stehenden Schaltgetrieben gehören gleichachsige und ungleichachsige Schaltmuffengetriebe, Schieberadgetriebe, Schaltklauengetriebe, und insbesondere Doppelkupplungsgetriebe und dergleichen. Aus Gründen der einfachen Darstellung bezieht sich die nachfolgend beschriebene exemplarische Ausführungsform auf ein Schaltmuffengetriebe, was jedoch in keiner Weise als Einschränkung der Anwendung der erfindungsgemäßen Lösung bei sonstigen Schaltgetrieben verstanden werden soll.

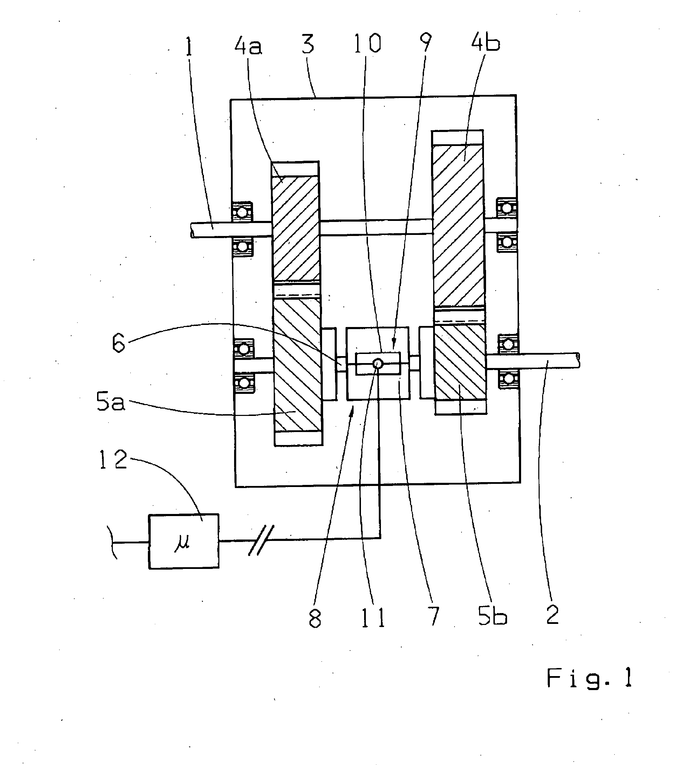

Die Fig. 1 zeigt ein Schaltgetriebe, welches einer nicht weiter dargestellten Antriebsmaschine, beispielsweise einem Verbrennungsmotor, nachgeschaltet ist, der an einer getriebeeingangangsseitigen Antriebswelle 1 anchließbar ist. Der Abtrieb erfolgt über eine Abtriebswelle 2 des Schaltgetriebes. In einem Getriebegehäuse 3 ist auf der Antriebswelle 1 ein erstes schräg verzahntes Zahnrad 4a sowie ein zweites schräg verzahntes Zahnrad 4b angeordnet. Das Zahnrad 4a kämmt mit einem zugeordneten dritten schräg verzahnten Zahnrad 5a; das Zahnrad 4b kämmt mit einem viertem, diesem zugeordneten schräg verzahnten Zahnrad 5b. Die beiden Zahnräder 5a und 5b dienen hier als Schalträder und sind in sofern lose drehbar auf einer Schaltwelle 6 der Abtriebswelle 2 angeordnet, welche sich innerhalb des Getriebegehäuses 3 befindet. Zwischen den beiden abtriebsseitigen losen Zahnrädern 5a und 5b befindet sich ein als Schaltmuffe ausgebildetes Schaltelement 7, das Bestandteil einer Schalteinrichtung 8 zum wechselseitigen Aufschalten der beiden Zahnräder 5a und 5b in den Getriebeleistungsfluss dient.

Stirnseitig des Schaltelements 7 befindet sich eine - nicht weiter dargestellte - Kerbverzahnung, welche mit einer korrespondierenden axialen Kerbverzahnung seitens der beiden Zahnräder 5a und 5b in Eingriff kommen kann, um das längs verschiebbare mitdrehend auf der Schaltwelle 6 angeordnete Schaltelement 7 in Eingriff zu bringen.

Hierfür dient eine integrierte Betätigungseinheit 9. Die hier als elektromechanische Schaltstelle ausgebildete Betätigungseinheit 9 des Schaltelements 7 umfasst als Aktor einen Elektromotor 10. Der Elektromotor 10 ist als ein bürstenloser Gleichstrommotor ausgebildet und umfasst einen integrierten Sensor 11 zur Erfassung der aktuellen Drehstellung der Motorwelle.

Eine dem Sensor 11 nachgeschaltete elektronische Auswerteeinheit 12 bestimmt aus der jeweils gemessenen Position der Schalteinrichtung 8 den Verfahrwegs x zwischen beiden Blockadestellungen des Schaltelements 7 an den beiden Zahnrädern 5a und 5b. Der sich hieraus ergebende Verfahrweg x wird anschließend mit den hinterlegten vier möglichen Verfahrwegen x_{NB}, x_{GB}, x_{LI} sowie x_{RE} verglichen, woraus die Auswerteeinheit 12 die Ist-Stellung der Schalteinrichtung 8 feststellt, um die Betätigungseinheit 9 bei in beiden Bewegungsrichtungen unterschiedlichen Durchschaltwegen zu initialisieren. Hierdurch erhält eine mit der Auswerteeinheit 12 verbundene - nicht weiter dargestellte - übergeordnete Steuereinheit eine Information über die aktuelle absolute Position der Schalteinrichtung 8.

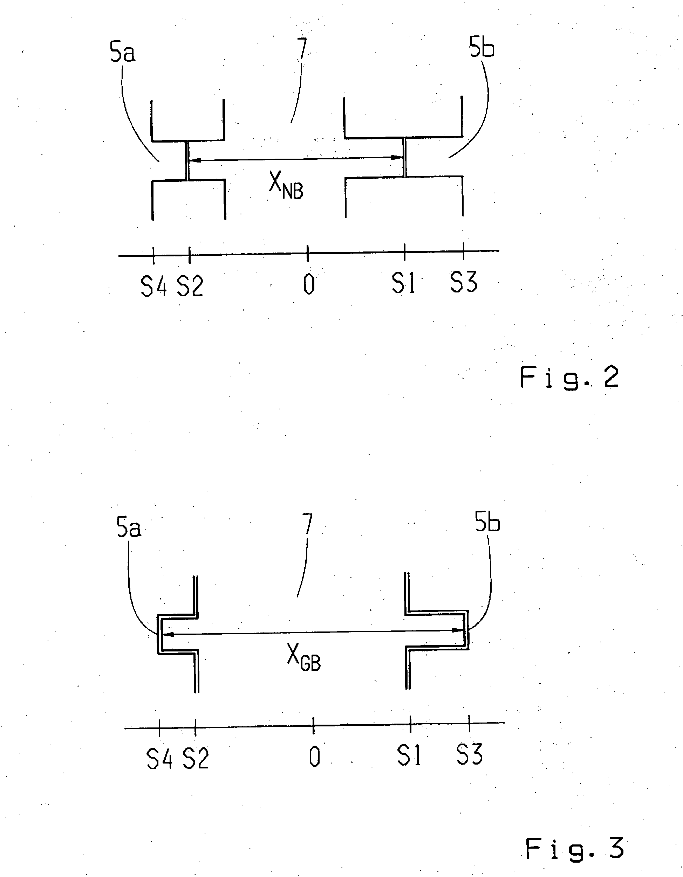

In den nachfolgenden Figuren der Zeichnung werden die vier verschiedenen möglichen Verfahrwege x_{NB}, x_{GB}, x_{LI}, x_{RE}, welche sich beim Durchfahren der Schalteinrichtung ergeben können, graphisch dargestellt:
Nach Fig. 2 ergibt sich der Verfahrweg x_{NB}, wenn das Schaltelement 7 an beiden Zahnrädern 5a und 5b auf eine Zahn-auf-Zahn-Stellung trifft. Dies entspricht der Breite zwischen den Punkten S1 und S2 der Schaltgasse. In dieser Situation kann ein Krafteingriff nicht erfolgen.

Dagegen illustriert die Fig. 2 einen Verfahrweg x_{GB}, welcher der vollständigen Gassenbreite entspricht. Der Verfahrweg x_{GB} ergibt sich zwischen S3 und S4 der Schaltgasse und gestattet ein beidseitiges Durchschalten des Schaltelements 7 mit den beiden Zahnrädern 5a oder 5b.

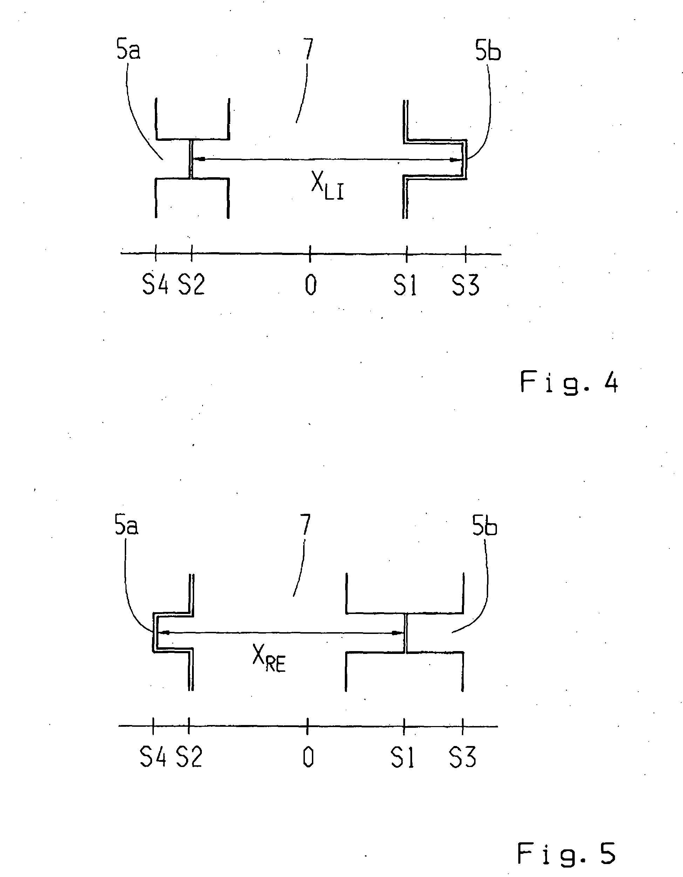

Im Unterschied hierzu illustriert die Fig. 3 mit dem Verfahrweg x_{LI} eine nur linksseitige Zahn-auf-Zahn-Stellung des Schaltelements 7; und die Fig. 5 zeigt eine rechtsseitige Zahn-auf-Zahn-Stellung des Schaltelements 7, hier am Zahnrad 5b.

Anhand der erfindungsgemäß durchzuführenden Vergleiche kann somit die IstPosition des Schaltelements 7 für Steuerungszwecke ermittelt werden, um beispielsweise ein Doppelkupplungsgetriebe, mit Zentralsynchronisation zu betreiben.

### Bezugszeichen

- 1: Antriebswelle
- 2: Abtriebswelle
- 3: Getriebegehäuse
- 4: Zahnrad (eingangsseitig)
- 5: Zahnrad (ausgangsseitig)
- 6: Schaltwelle
- 7: Schaltelement
- 8: Schalteinrichtung
- 9: Betätigungselement
- 10: Elektromotor
- 11: Sensor
- 12: Auswerteeinheit

## Patentansprüche

1. Verfahren zur Initialisierung einer Betätigungseinheit (9) einer SchaJteinrichtung (8), die ein in beide Bewegungsrichtungen entlang einer Schallwelle (6) verfahrbares Schaltelement (7) zum wechselseitigen Aufschalten zweier Zahnräder (5a, 5b) in einen Getriebeleistungsfluss aufweist, bei dem ein Sensor (11) der Betätigungseinheit (9) zur Positionserfassung der Schalteinrichtung (8) verwendet wird, wofür das Schaltelement (7) der Schalteinrichtung (8) nacheinander in beide Bewegungsrichtungen bis zur endseitigen Blockadestellung an dem jeweiligen Zahnrad (5a, 5b) gefahren wird, wobei hieraus der Verfahrweg (x) zwischen beiden Blockadestellungen ermittelt wird, welcher anschließend mit vier hinterlegten möglichen Verfahrwegen (x_{NB}. x_{QB,} xₗᵢ, xᵣₑ) verglichen wird, wobei ein Verfahrweg (x_{NB}), dem Verfahrweg entspricht, wenn das Schaltelement (7) an beiden Zahnrädern (5a, 5b) auf eine Zahn-auf-Zahn-Stellung trifft, wobei ein Verfahrweg (x_{GB}), dem Verfahrweg entspricht, wenn ein beidseitiges Durchschalten des Schaltelements (7) mit den beiden Zahnrädern (5a 5b) erfolgt, wobei ein Verfahrweg (xₗᵢ), dem Verfahrweg bei einer nur linksseitigen Zahn-auf-Zahn-Stellung des Schaltelements (7) entspricht und ein Verfahrweg (xᵣₑ), dem Verfahrweg bei einer nur rechtsseitigen Zahn-auf-Zahn-Stellung des Schaltelements (7) entspricht, woraus die Ist-Stellung der Schalteinrichtung (8) festgestellt wird, um die Betätigungseinheit (9) bei in beiden Bewegungsrichtungen unterschiedlichen Durchschaltwegen (S4 bis S2, S1 bis S3) zu initialisieren, **dadurch gekennzeichnet, dass** die der jeweiligen Stellung der Schalteinrichtung (8) entsprechende Drehstellung einer Motorwelle eines als bürstenloser Gleichstrommotor ausgeführten Elektromotors (10), der als Aktor der Betätigungseinheit (9) dient und in den der Sensor (11) zur Positionserfassung der Schalteinrichtung (8) anhand der Erfassung der aktuellen Drehstellung der Motorwelle des büstenlosen Gleichstrommotors (10) integriert ist, nach jedem Schaltvorgang erfasst und gespeichert wird.

2. Verfahren nach Anspruch 1, **dadurch gekennzeichnet, dass** beide Bewegungsrichtungen mehrfach durchfahren werden und die jeweiligen Ergebnisse für die Ist-Stellung der Schalteinrichtung (8) anschließend gemittelt werden.

3. Verfahren nach Anspruch 1, **dadurch gekennzeichnet, dass** eine Übereinstimmung des ermittelten Verfahrwegs (x) mit dem kürzesten hinterlegten Verfahrweg (X_{NB}), als eine beidseitige Zahn-auf-Zahn-Stellung des Schaltelements (7) mit den beiden Zahnrädern (5a, 5b) ausgewertet wird.

4. Verfahren nach Anspruch 1, **dadurch gekennzeichnet, dass** eine Übereinstimmung des ermittelten Verfahrwegs (x) mit dem längsten hinterlegten Verfahrweg (x_{GB}), als eine beidseitige Durchschaltstellung des Schaltelements (7) mit den beiden Zahnrädern (5a, 5b) ausgewertet wird.

5. Verfahren nach Anspruch 1, **dadurch gekennzeichnet, dass** eine Übereinstimmung des ermittelten Verfahrwegs (x) mit dem hinterlegten Verfahrweg (xᵣₑ), der einer nur rechtsseitigen Zahn-auf-Zahn-Stellung des Schaltelements (7) entspricht, als eine nur rechtsseitige Zahn-auf-Zahn-Stellung des Schaltelements (7) mit den beiden Zahnrädern (5a, 5b) ausgewertet wird.

6. Verfahren nach Anspruch 1, **dadurch gekennzeichnet, dass** eine Übereinstimmung des ermittelten Verfahrwegs (x) mit dem hinterlegten Verfahrweg (xₗᵢ), der einer nur linksseitigen Zahn-auf-Zahn-Stellung des Schaltelements (7) entspricht,als eine nur linksseitige Zahn-auf-Zahn-Stellung des Schaltelements (7) mit den beiden Zahnrädern (5a, 5b) ausgewertet wird.

7. Schalteinrichtung (8) für ein Lastschaltgetriebe mit einer Betätigungseinheit (9), die zum wechselseitigen Aufschalten zweier Zahnräder (5a, 5b) in einen Getriebeleistungsfluss ein entlang einer Schaltwelle (6) verfahrbares Schaltelement (7) der Schalteinrichtung (8) verfährt , wobei die Betätigungseinheit (9) zur Initialisierung nacheinander in beide Bewegungsrichtungen bis zur endseitigen Blockadestellung an dem jeweiligen Zahnrad (5a, 5b) das Schaltelement (7) verfährt, wobei ein Sensor (11) der Betätigungseinheit (9) zur Positionserfassung der Schalteinrichtung (8) vorgesehen ist, wobei eine elektronische Auswerteeinheit (12) aus der von dem Sensor (11) jeweils erfassten Position der Schalteinrichtung (8) den Verfahrweg (x) zwischen beiden Blockadestellungen ermittelt, um diesen mit vier hinterlegten möglichen Verfahrwegen (x_{NB}, x_{GB}, xₗᵢ, xᵣₑ) des Schaltelements (7) zu vergleichen, wobei ein Verfahrweg (x_{NB}), dem Verfahrweg entspricht, wenn das Schaltelement (7) an beiden Zahnrädern (5a, 5b) auf eine Zahn-auf-Zahn-Stellung trifft, wobei ein Verfahrweg (x_{GB}), dem Verfahrweg entspricht, wenn ein beidseitiges Durchschalten des Schaltelements (7) mit den beiden Zahnrädern (5a 5b) erfolgt, wobei ein Verfahrweg (x_{Li}), dem Verfahrweg bei einer nur linksseitigen Zahn-auf-Zahn-Stellung des Schaltelements (7) entspricht und ein Verfahrweg (xᵣₑ), dem Verfahrweg bei einer nur rechtsseitigen Zahn-auf-Zahn-Stellung des Schaltelements (7) entspricht, woraus die Ist-Stellung der Schalteinrichtung (8) feststellbar ist, um die Betätigungseinheit (9) bei in beiden Bewegungsrichtungen unterschiedlichen Durchschaltwegen (S4 bis S2, S1 bis S3) zu initialisieren, **dadurch gekennzeichnet, dass** die Betätigungseinheit (9) als elektromechanischer Schaltsteller ausgebildet ist, welcher als Aktor einen bürstenlose Gleichstrommotor (10) und den im Gleichstrommotor (10) integrierten Sensor (11) zur Positionserfassung der Schalteinrichtung (8) anhand der Erfassung der aktuellen Drehstellung einer Motorwelle des bürstenlosen Gleichstrommotors (10) aufweist.

8. Lastschaltgetriebe, vorzugsweise Doppelkupplungsgetriebe, mit wenigstens einer Schalteinrichtung (8) nach Anspruch 7.

## Claims

1. Method for initializing an actuation unit (9) of a shift device (8) which has a shift element (7) which can be moved in both directions of movement along a shift shaft (6) and has the purpose of alternately connecting two gear wheels (5a, 5b) into a transmission power flux, in which a sensor (11) of the actuation unit (9) is used for sensing the position of the shift device (8), for which purpose the shift element (7) of the shift device (8) is moved successively in both directions of movement up to the final blocked position on the respective gear wheel (5a, 5b), wherein the movement distance (x) between the two blocked positions is determined from this and is subsequently compared with four stored possible movement distances (x_{NB}, x_{GB}, xₗᵢ, xᵣₑ) wherein a movement distance (x_{NB}) corresponds to the movement distance when the shift element (7) impacts on a tooth-on-tooth position on both gear wheels (5a, 5b), wherein a movement distance (x_{GB}) corresponds to the movement distance when through-connection of the shift element (7) on both sides takes place with both gear wheels (5a, 5b), wherein a movement distance (xₗᵢ) corresponds to the movement distance in the case of a tooth-on-tooth position of the shift element (7) only on the left-hand side, and a movement distance (xᵣₑ) corresponds to the movement distance in the case of a tooth-on-tooth position of the shift element (7) only on the right-hand side, from which the actual position of the shift device (8) is determined in order to initialize the actuation unit (9) in the case of through-connection distances (S4 to S2, S1 to S3) which are different in the two directions of movement, **characterized in that** the rotational position, corresponding to the respective position of the shift device (8), of a motor shaft of an electric motor (10) which is embodied as a brushless DC motor and which serves as an actuator of the actuation unit (9) and into which the sensor (11) for sensing the position of the shift device (8) on the basis of the sensing of the current rotational position of the motor shaft of the brushless DC motor (10) is integrated is sensed and stored after each shifting process.

2. Method according to Claim 1, **characterized in that** the two directions of movement are travelled through repeatedly and the respective results for the actual position of the shift device (8) are subsequently averaged.

3. Method according to claim 1, **characterized in that** correspondence of the determined movement distance (x) with the shortest stored movement distance (x_{NB}) is evaluated as a tooth-on-tooth position of the shift element (7) on both sides with the two gear wheels (5a, 5b).

4. Method according to claim 1, **characterized in that** correspondence of the determined movement distance (x) with the longest stored movement distance (x_{GB}) is evaluated as a through-connection position of the shift element (7) on both sides with the two gear wheels (5a, 5b).

5. Method according to Claim 1, **characterized in that** correspondence of the determined movement distance (x) with the stored movement distance (xᵣₑ), which corresponds to a tooth-on-tooth position of the shift element (7) only on the right-hand side is evaluated as a tooth-on-tooth position of the shift element (7) only on the right-hand side with the two gear wheels (5a, 5b).

6. Method according to Claim 1, **characterized in that** correspondence of the determined movement distance (x) with the stored movement distance (xₗᵢ) which corresponds to a tooth-on-tooth position of the shift element (7) only on the left-hand side is evaluated as a tooth-on-tooth position of the shift element (7) only on the left-hand side with the two gear wheels (5a, 5b).

7. Shift device (8) for a power shift transmission having an actuation unit (9) which, in order to alternately connect two gear wheels (5a, 5b) into a transmission power flux, moves a shift element (7), which can be moved along a shift shaft (6), of the shift device (8), wherein for the purpose of initialization the actuation unit (9) moves the shift element (7) successively in both directions of movement up to a final blocked position on the respective gear wheel (5a, 5b), wherein a sensor (11) of the actuation unit (9) is provided for sensing the position of the shift device (8), wherein an electronic evaluation unit (12) determines, from the position of the shift device (8) which is respectively sensed by the sensor (11), the movement distance (x) between the two blocked positions, in order to compare said movement distance (x) with four stored possible movement distances (x_{NB}, x_{GB}, xₗᵢ, xᵣₑ) of the shift element (7), wherein a movement distance (x_{NB}) corresponds to the movement distance when the shift element (7) impacts on a tooth-on-tooth position on both gear wheels (5a, 5b), wherein a movement distance (x_{GB}) corresponds to the movement distance when through-connection of the shift element (7) on both sides takes place with both gear wheels (5a, 5b), wherein a movement distance (xₗᵢ) corresponds to the movement distance in the case of a tooth-on-tooth position of the shift element (7) only on the left-hand side, and a movement distance (xᵣₑ) corresponds to the movement distance in the case of a tooth-on-tooth position of the shift element (7) only on the right-hand side, from which the actual position of the shift device (8) can be determined in order to initialize the actuation unit (9) in the case of through-connection distances (S4 to S2, S1 to S3) which are different in the two directions of movement, **characterized in that** the actuation unit (9) is embodied as an electromechanical shift actuator which has as actuator a brushless DC motor (10) and the sensor (11) which is integrated in the DC motor (10) and has the purpose of sensing the position of the shift device (8) on the basis of the sensing of the current rotational position of a motor shaft of the brushless DC motor (10).

8. Power shift transmission, preferably double clutch transmission, having at least one shift device (8) according to Claim 7.

## Revendications

1. Procédé d'initialisation d'une unité d'actionnement (9) d'un dispositif de changement de rapport (8) qui possède un élément de changement de rapport (7) pouvant être déplacé dans deux directions de mouvement le long d'un arbre de changement de rapport (6) en vue d'engager en alternance deux roues dentées (5a, 5b) dans un flux de puissance de transmission, selon lequel un capteur (11) de l'unité d'actionnement (9) est utilisé pour détecter la position du dispositif de changement de rapport (8), ce pour quoi l'élément de changement de rapport (7) du dispositif de changement de rapport (8) est déplacé successivement dans les deux directions de mouvement jusqu'à la position de blocage du côté de l'extrémité contre la roue dentée (5a, 5b) respective, la course de déplacement (x) entre les deux positions de blocage étant déterminée à partir de ceci, laquelle est ensuite comparée avec quatre courses de déplacement (x_{NB}, x_{GB}, x_{li,} xᵣₑ) possibles enregistrées, une course de déplacement (x_{NB}) correspondant à la course de déplacement lorsque l'élément de changement de rapport (7) atteint sur les deux roues dentées (5a, 5b) une position dent sur dent, une course de déplacement (x_{GB}) correspondant à la course de déplacement lorsqu'un transfert direct bilatéral de l'élément de changement de rapport (7) avec les deux roues dentées (5a, 5b) est effectué, une course de déplacement (xₗᵢ) correspondant à la course de déplacement dans le cas d'une position dent sur dent de l'élément de changement de rapport (7) uniquement du côté gauche et une course de déplacement (xᵣₑ) correspondant à la course de déplacement dans le cas d'une position dent sur dent de l'élément de changement de rapport (7) uniquement du côté droit, la position réelle du dispositif de changement de rapport (8) étant définie à partir de cela afin d'initialiser l'unité d'actionnement (9) en présence de courses de transfert direct (S4 à S2, S1 à S3) différentes dans les deux directions de mouvement, **caractérisé en ce que** la position de rotation d'un arbre de moteur, correspondant à la position respective du dispositif de changement de rapport (8), d'un moteur électrique (10) réalisé sous la forme d'un moteur à courant continu sans balais, lequel sert d'actionneur de l'unité d'actionnement (9) et dans lequel est intégré le capteur (11) destiné à détecter la position du dispositif de changement de rapport (8) à l'aide de la détection de la position de rotation actuelle de l'arbre de moteur du moteur à courant continu sans balais (10), est détectée et mise en mémoire après chaque opération de changement de rapport.

2. Procédé selon la revendication 1, **caractérisé en ce que** les deux directions de mouvement sont parcourues plusieurs fois et la moyenne des résultats respectifs est ensuite calculée pour la position réelle du dispositif de changement de rapport (8).

3. Procédé selon la revendication 1, **caractérisé en ce qu'**une concordance de la course de déplacement (x) déterminée avec la course de déplacement enregistrée la plus courte (x_{NB}) est interprétée comme une position dent sur dent bilatérale de l'élément de changement de rapport (7) avec les deux roues dentées (5a, 5b).

4. Procédé selon la revendication 1, **caractérisé en ce qu'**une concordance de la course de déplacement (x) déterminée avec la course de déplacement enregistrée la plus longue (x_{GB}) est interprétée comme une position de transfert direct bilatéral de l'élément de changement de rapport (7) avec les deux roues dentées (5a, 5b).

5. Procédé selon la revendication 1, **caractérisé en ce qu'**une concordance de la course de déplacement (x) déterminée avec la course de déplacement enregistrée (xᵣₑ) qui correspond à une position dent sur dent de l'élément de changement de rapport (7) uniquement du côté droit est interprétée comme une position dent sur dent uniquement du côté droit de l'élément de changement de rapport (7) avec les deux roues dentées (5a, 5b).

6. Procédé selon la revendication 1, **caractérisé en ce qu'**une concordance de la course de déplacement (x) déterminée avec la course de déplacement enregistrée (xₗᵢ) qui correspond à la position dent sur dent de l'élément de changement de rapport (7) uniquement du côté gauche est interprétée comme une position dent sur dent de l'élément de changement de rapport (7) uniquement du côté gauche avec les deux roues dentées (5a, 5b).

7. Dispositif de changement de rapport (8) pour une boîte de vitesses avec commande sous charge comprenant une unité d'actionnement (9) qui, en vue d'engager en alternance deux roues dentées (5a, 5b) dans un flux de puissance de transmission, déplace un élément de changement de rapport (7) du dispositif de changement de rapport (8) pouvant être déplacé le long d'un arbre de changement de rapport (6), l'unité d'actionnement (9), en vue de l'initialisation, déplaçant l'élément de changement de rapport (7) successivement dans les deux directions de mouvement jusqu'à la position de blocage du côté de l'extrémité contre la roue dentée (5a, 5b) respective, un capteur (11) de l'unité d'actionnement (9) étant conçu pour détecter la position du dispositif de changement de rapport (8), une unité d'interprétation (12) électronique déterminant à partir de la position du dispositif de changement de rapport (8) respectivement détectée par le capteur (11) la course de déplacement (x) entre les deux positions de blocage, afin de comparer celle-ci avec quatre courses de déplacement (x_{NB}, x_{GB}, xₗᵢ, xᵣₑ) possibles enregistrées de l'élément de changement de rapport (7), une course de déplacement (x_{NB}) correspondant à la course de déplacement lorsque l'élément de changement de rapport (7) atteint sur les deux roues dentées (5a, 5b) une position dent sur dent, une course de déplacement (x_{GB}) correspondant à la course de déplacement lorsqu'un transfert direct bilatéral de l'élément de changement de rapport (7) avec les deux roues dentées (5a, 5b) est effectué, une course de déplacement (xₗᵢ) correspondant à la course de déplacement dans le cas d'une position dent sur dent de l'élément de changement de rapport (7) uniquement du côté gauche et une course de déplacement (xᵣₑ) correspondant à la course de déplacement dans le cas d'une position dent sur dent de l'élément de changement de rapport (7) uniquement du côté droit, la position réelle du dispositif de changement de rapport (8) pouvant être définie à partir de cela afin d'initialiser l'unité d'actionnement (9) en présence de courses de transfert direct (S4 à S2, S1 à S3) différentes dans les deux directions de mouvement, **caractérisé en ce que** l'unité d'actionnement (9) est réalisée sous la forme d'un combinateur électromécanique qui possède comme actionneur un moteur à courant continu sans balais (10) ainsi que le capteur (11) intégré dans le moteur à courant continu (10) pour la détection de la position du dispositif de changement de rapport (8) à l'aide de la détection de la position de rotation actuelle d'un arbre de moteur du moteur à courant continu sans balais (10).

8. Boîte de vitesses avec commande sous charge, de préférence boîte de vitesses à double embrayage, comprenant au moins un dispositif de changement de rapport (8) selon la revendication 7.
